# EUROPÄISCHE PATENTSCHRIFT

(11) **EP 1 801 049 B1**
(45) Veröffentlichungstag und Bekanntmachung des Hinweises auf die Patenterteilung: **16.07.2008**
(21) Anmeldenummer: 06021792.4
(22) Anmeldetag: 18.10.2006
(51) Int. Cl.: B65G 53/56, F16K 11/083

(54) **Rohrweiche**
Pipeswitch
Aiguillage de tuyaux

(30) Priorität: 22.12.2005 DE 102005061432
(43) Veröffentlichungstag der Anmeldung: 27.06.2007
(73) Patentinhaber: Coperion Waeschle GmbH & Co. KG, 88250 Weingarten (DE)
(72) Erfinder: Zinser, Bruno, 88289 Waldburg (DE); Schädler, Manfred, 88213 Ravensburg (DE)
(74) Vertreter: Hofmann, Matthias

(56) Entgegenhaltungen:
- EP-A1- 0 305 821
- DE-B- 1 088 873
- FR-A1- 2 627 252
- US-A1- 3 199 537

## Beschreibung

Die Erfindung betrifft eine Rohrweiche nach dem Oberbegriff des Anspruches 1.

Derartige Rohrweichen sind bekannt aus der DE-PS 1 088 873, der US 3,199,537 A und der FR 2 627 252 A1. Da das Küken zur Umstellung zwischen den beiden Förderstellungen im Kükengehäuse beweglich sein muss, lässt es sich oft nicht vermeiden, dass Fördergut in nicht zu den Förderleitungen gehörende Hohlräume, insbesondere zwischen dem Küken und dem Kükengehäuse, eindringt. Dies führt zur Notwendigkeit einer regelmäßigen Reinigung der Rohrweiche, um Rückstände von Fördergut aus diesen Hohlräumen zu entfernen. Die aus dem Stand der Technik bekannten Rohrweichen sind nur mit relativ hohem Aufwand zu reinigen.

Es ist daher eine Aufgabe der vorliegenden Erfindung, eine Rohrweiche der eingangs genannten Art derart weiterzubilden, dass sie einfacher gereinigt werden kann.

Diese Aufgabe ist erfindungsgemäß gelöst durch eine Rohrweiche mit den im Kennzeichnungsteil des Anspruches 1 angegebenen Merkmalen.

Erfindungsgemäß wurde erkannt, dass ein Grundproblem, welches die Reinigungsfreundlichkeit bei den Rohrweichen nach dem Stand der Technik beeinträchtigt, darin besteht, dass die Dichtelemente, die das Küken gegenüber dem Kükengehäuse in dessen Förderstellungen notwendig abdichten, eine Reinigung von nicht zu den Förderleitungen gehörenden Hohlräumen bzw. Spalten bei im Kükengehäuse verbleibendem Küken unmöglich machen, wenn diese Dichtelemente in der aktiven Dichtstellung liegen. Die Schaffung der Möglichkeit der Umstellung des Kükens von der Förder-Grundstellung in eine Reinigungsstellung erlaubt es, die Dichtelemente hinsichtlich ihrer Dichtwirkung außer Kraft zu setzen und damit ein Reinigungsfluid durch die zu reinigenden Hohlräume zu führen. Das Küken kann daher bei der Reinigung im Kükengehäuse verbleiben, was die Reinigung der Rohrweiche, insbesondere zur Einhaltung von Lebensmittelstandards, deutlich erleichtert. Die Rohrweiche eignet sich daher sehr gut zur Anwendung im Lebensmittelbereich oder bei sonstigen Hygieneanwendungen. Hierbei sind insbesondere so genannte Clean In Place- (CIP) Anwendungen zu nennen, bei denen die Rohrweiche im zusammengebauten Zustand in allen vom Förderprodukt berührten Bereichen sauber werden muss. Nach dem Reinigen können alle z. B. mit Reinigungsflüssigkeit benetzten Oberflächen im Inneren der Rohrweiche vollständig abtrocknen, ohne dass Fördergutreste vorhanden sind, auf denen sich insbesondere Keime niederlassen können. Die Rohrweiche kann natürlich auch bei anderen Anwendungen zur Förderung eines Fördergut/Förderluftgemisches herangezogen werden. Es ist klar, dass die Rohrweiche bei gleichem Aufbau genauso auch als Sammelweiche eingesetzt sein kann, bei der die Funktion von Zuführ- und Abführleitungen genau vertauscht ist, also mindestens zwei Zuführleitungen, zwischen denen mittels der Weichenanordnung umgeschaltet werden kann, und eine Sammel-Abführleitung vorliegen.

Eine Verjüngung des Kükens nach Anspruch 2 ermöglicht eine einfache Inaktivierung der Dichtelemente beim Übergang in die Reinigungsstellung. Aufgrund der Konusform des Kükens und des hierzu komplementär geformten Kükengehäuses werden die Dichtelemente automatisch inaktiv, sobald das Küken in die Reinigungsstellung verlagert wird. Beim Übergang in die Reinigungsstellung wird ein sehr enger Spalt zwischen dem Küken und dem Kükengehäuse aufgeweitet, sodass dieser Spalt für eine Reinigung ausreichend vergrößert wird.

Ein Kükenantrieb nach Anspruch 3 lässt sich mit Standard-Antriebskomponenten realisieren.

Eine Erfassungseinrichtung nach Anspruch 4 ermöglicht eine objektive Positionsüberwachung der jeweiligen Kükenstellung. Die Rohrweiche kann daher in ein automatisches Fördersystem integriert werden.

Eine Sensorkomponentenanordnung nach Anspruch 5 gewährleistet eine Funktion des Förderstellungs-Positionssensors unabhängig von der Hubstellung des Kükens.

Dabei ist eine Ausgestaltung des Kükenantriebs und des zweiten Positionssensors nach Anspruch 6 konstruktiv elegant.

Ein nach Anspruch 7 geformter Übergangsbereich führt zu einer reinigungsfreundlichen Gestaltung des Rückzugsraumes. Reste bzw. Rückstände von Fördergut, die sich dort unerwünscht angesammelt haben und durch die Reinigung entfernt werden sollen, können sich insbesondere nicht in Kantenbereichen im Bereich des Bodens des Rückzugsraumes festsetzen. Auch Dichtflächen im zu reinigenden Bereich der Rohrweiche sind vorzugsweise eben und ohne Spalte gestaltet.

Ein Ausführungsbeispiel der Erfindung wird nachfolgend anhand der Zeichnung näher erläutert. In dieser zeigen:
- Fig. 1: eine Aufsicht auf eine Rohrweiche für Förderleitungen;

- Fig. 2: die Rohrweiche nach Fig. 1, jedoch anders orientiert, in einem Horizontalschnitt und mit einem Küken einer Weichenanordnung in Förder-Grundstellung;
- Fig. 3: eine zu Fig. 2 ähnliche Ansicht mit dem Küken in einer Reinigungsstellung;
- Fig. 4: vergrößert einen geschnittenen Ausschnitt der Rohrweiche nach Fig. 1 im Bereich eines Bodens eines Rückzugsraumes eines Kükengehäuses der Weichenanordnung;

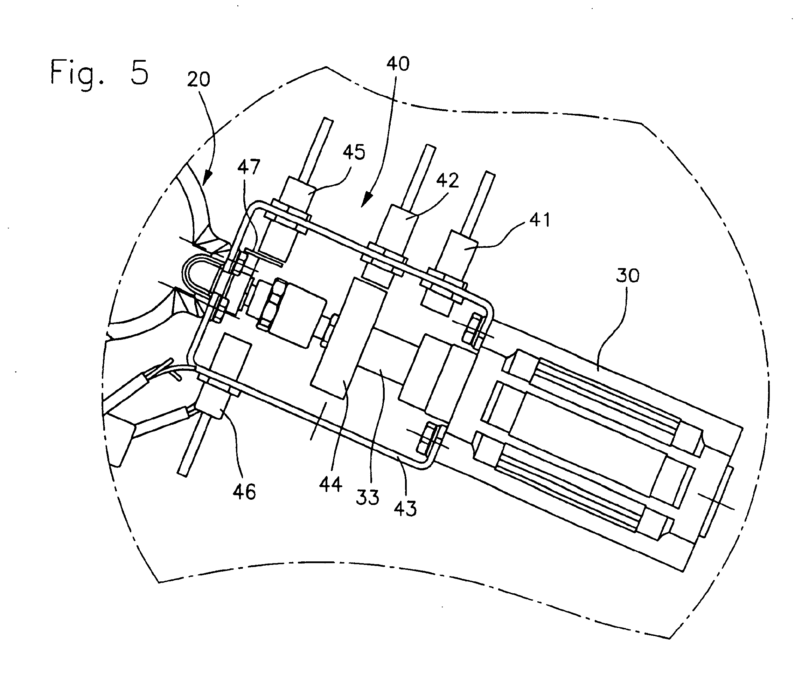

- Fig. 5: eine Ausschnittsvergrößerung der Fig. 1 im Bereich einer Erfassungseinrichtung für die Kükenstellungen; und

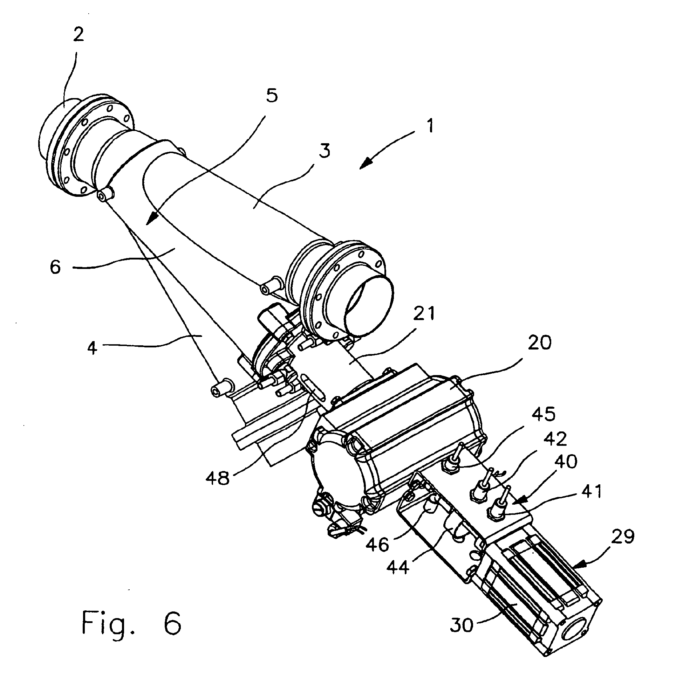

- Fig. 6: eine perspektivische Ansicht der Rohrweiche nach den Fig. 1 bis 5.

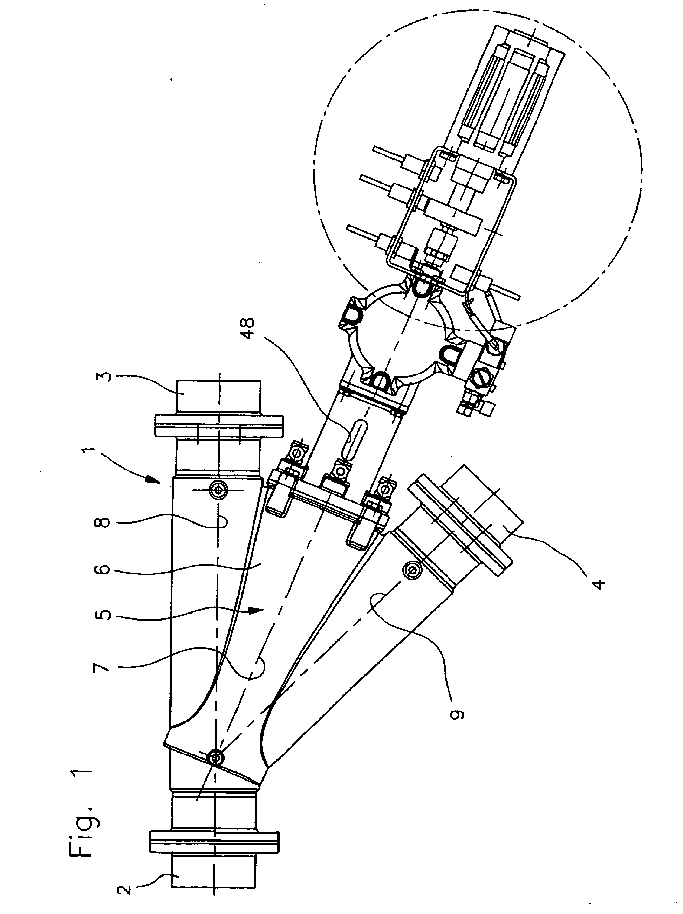

Eine Rohrweiche 1 für Förderleitungen dient insbesondere zum pneumatischen Transport von Fördergut für Lebensmittelanwendungen. Die Rohrweiche 1 hat eine in Fig. 1 links dargestellte Zuführleitung 2, eine in Fig. 1 rechts oben dargestellte erste Abführleitung 3 und eine in Fig. 1 von der Verbindung zwischen der Zuführleitung 2 und der ersten Abführleitung 3 nach rechts unten abzweigende zweite Abführleitung 4. Die Rohrweiche 1 kann auch als Verteilerweiche mit mehreren zweiten Abführleitungen 4 oder als Sammelweiche mit mehreren Zuführleitungen eingesetzt werden.

In eine Weichenanordnung 5 der Rohrweiche 1 münden die Zuführleitung 2, die erste Abführleitung 3 und die zweite Abführleitung 4 ein. Die Weichenanordnung 5 hat ein Kükengehäuse 6, welches zwischen der ersten Abführleitung 3 und der zweiten Abführleitung 4 so angeordnet ist, dass eine Längsachse 7 des Kükengehäuses 6 mit einer Winkelhalbierenden zwischen Förderachsen 8, 9 der Rohrweiche 1 zusammenfällt. Die Förderachse 8 wird durch die miteinander zusammenfallenden Längsachsen der Zuführleitung 2 und der ersten Abführleitung 3 vorgegeben. Die Förderachse 9 wird durch die Längsachse der zweiten Abführleitung 4 vorgegeben. Die nachfolgend noch näher beschriebenen Komponenten der Weichenanordnung 5 sind hintereinander längs der Längsachse 7 des Kükengehäuses 6 angeordnet.

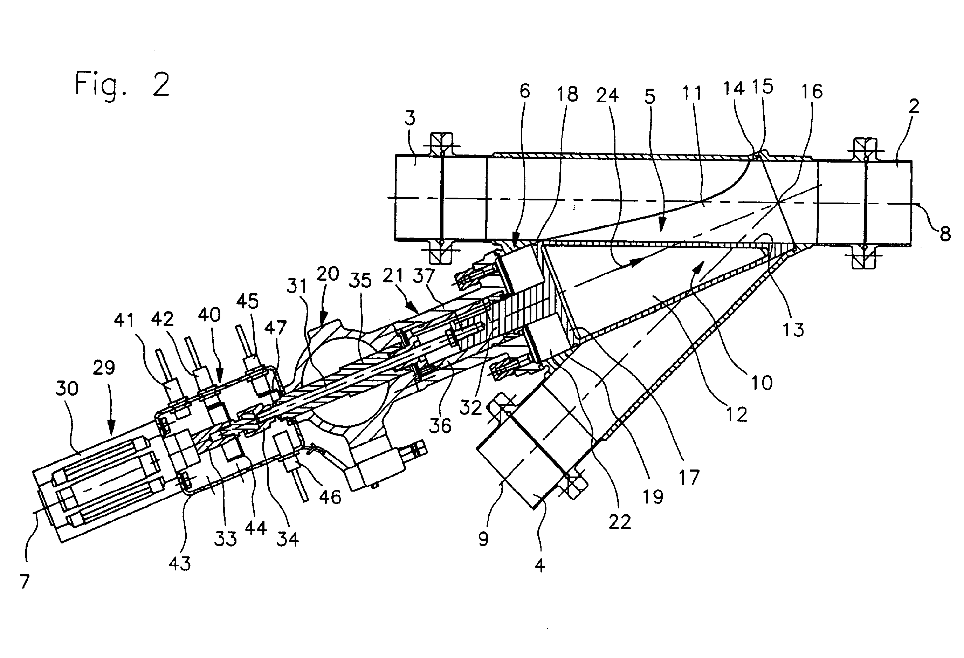

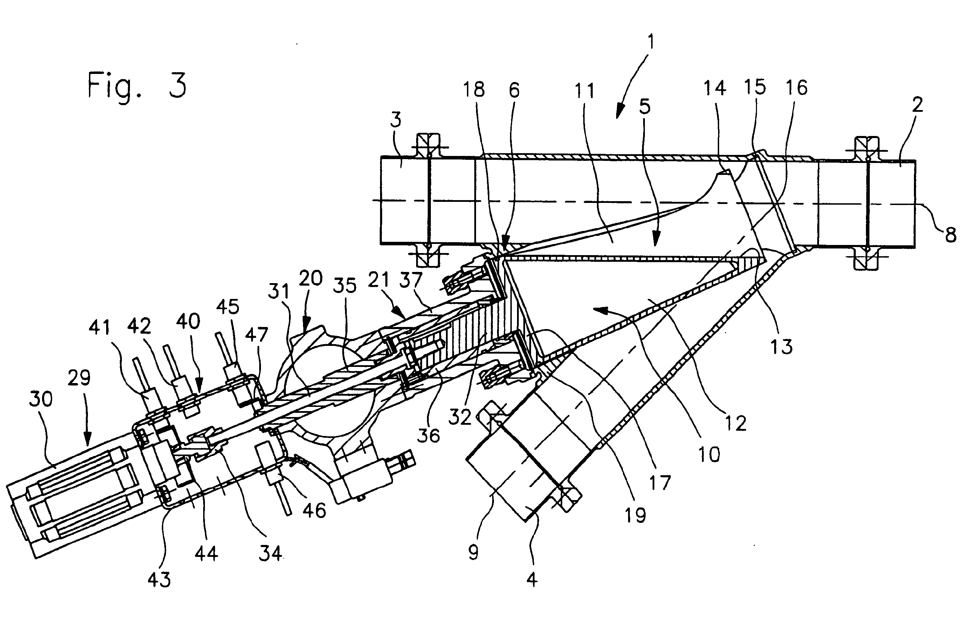

Die Weichenanordnung 5 hat weiterhin ein in den Schnittdarstellungen der Fig. 2 und 3 gezeigtes Küken 10. Dieses ist in Fig. 2 in einer ersten Förderstellung gezeigt. In dieser gibt das Küken 10 einen ersten Förderdurchgang längs der Förderachse 8 zwischen der Zuführleitung 2 und der ersten Abführleitung 3 frei. Gleichzeitig verschließt das Küken 10 in der ersten Förderstellung einen zweiten Förderdurchgang zwischen der Zuführleitung 2 und der zweiten Abführleitung 4. Dieser zweite Förderdurchgang verläuft ausgehend von der Zuführleitung 2 zunächst längs der Förderachse 8 und biegt dann stumpfwinklig längs der Förderachse 9 in die zweite Abführleitung 4 ein. Das Küken 10 ist im Kükengehäuse 6 um eine mit der Längsachse 7 des Kükengehäuses 6 und des Kükens 10 zusammenfallende Schwenkachse zwischen der ersten Förderstellung und einer zweiten Förderstellung um 180° schwenkbar. In dieser zweiten, in der Zeichnung nicht dargestellten Förderstellung gibt das Küken 10 den zweiten Förderdurchgang zwischen der Zuführleitung 2 und der zweiten Abführleitung 4 unter Verschluss des ersten Förderdurchgangs zwischen der Zuführleitung 2 und der ersten Abführleitung 3 frei.

Das Küken 10 ist unterteilt in einen Durchgangsabschnitt 11 und einen Verschlussabschnitt 12. Ein Durchgang 13 des Durchgangsabschnitts 11 ist, wie dies aus dem Stand der Technik an sich bekannt ist, so geformt, dass er sich in der jeweiligen Förderstellung des Kükens 10 konturgerecht in den jeweiligen Förderdurchgang einpasst, sodass der Förderdurchgang im Bereich des Ein- und Austritts in die Weichenanordnung 5 keine Nennweiten- oder Querschnittsänderung aufweist. In den Förderstellungen liegt ein führender Umfangswandabschnitt 14 des Durchgangsabschnitts 11 des Kükens 10 an einem Dichtring 15 an, der in einer gehäusefesten Umfangsnut der Rohrweiche 1 untergebracht ist. Über den Dichtring 15 ist der Durchgang 13 des Durchgangsabschnitts 11 des Kükens 10 daher gegen das Gehäuse der Rohrweiche 1 im Bereich einer Abzweigung 16 zwischen dem ersten und dem zweiten Förderdurchgang abgedichtet. Ein Umfangswandabschnitt im Bereich eines Kükenbodens 17 ist über einen Dichtring 18 gegen einen bodenseitigen Abschnitt 19 des Kükengehäuses 6 abgedichtet. Der Dichtring 18 liegt in einer äußeren Umfangsnut, die einen sich zu ihrem Boden hin erweiternden Schwalbenschwanz-Querschnitt aufweist, im Bereich des Kükenbodens 17. Der erwähnte Schwalbenschwanz-Querschnitt der Umfangsnut für den Dichtring 18 hat zur Folge, dass der Dichtring 18 dichtend gegen mantelseitige Kanten im Bereich der stärksten Querschnittsverjüngung der Umfangsnut gepresst wird. Zum Zwischenraum zwischen dem Küken 10 und dem Kükengehäuse 6 hin liegen daher einfach zu reinigende Übergänge zwischen der Dichtung 18 und der angrenzenden Mantelwand des Kükens 10 vor. Beim Dichtring 18 handelt es sich um einen PTFE-ummantelten O-Ring mit daher geringem Reibungskoeffizienten.

Zum Verschwenken des Kükens 10 zwischen den beiden Förderstellungen dient ein Schwenkantrieb 20, der als pneumatischer Schwenk- bzw. Drehantrieb ausgeführt ist. Pneumatische Antriebe nach Art des Schwenkantriebes 20 sind dem Fachmann bekannt. Der Schwenkantrieb 20 ist auf der der Leitung 2 abgewandten Seite des Kükengehäuses 6 angeordnet. Zwischen dem Schwenkantrieb 20 und dem Kükengehäuse 6 liegt eine Führungseinheit 21. Die Führungseinheit 21 dient zur Lagerung von beweglichen Verlagerungskomponenten für den Antrieb des Kükens 10.

Ein Rückzugsraum 22 im Kükengehäuse 6 ist derart größer als das Küken 10, dass Letzteres im Kükengehäuse 6 hubverlagerbar ist. Fig. 2 zeigt das Küken 10 in einer Förder-Grundstellung, in der das Küken 10 zwischen der ersten und der zweiten Förderstellung mit Hilfe des Schwenkantriebes 20 verschwenkbar ist. Fig. 3 zeigt das Küken 10 in einer Reinigungsstellung, in der das Küken 10 im Vergleich zur Förder-Grundstellung auf die Führungseinheit 21 zu hubverlagert ist. In der Reinigungsstellung ist der Kükenboden 17 einem Gehäuseboden 23, der durch eine entsprechende Stirnwand der Führungseinheit 21 gebildet ist, benachbart.

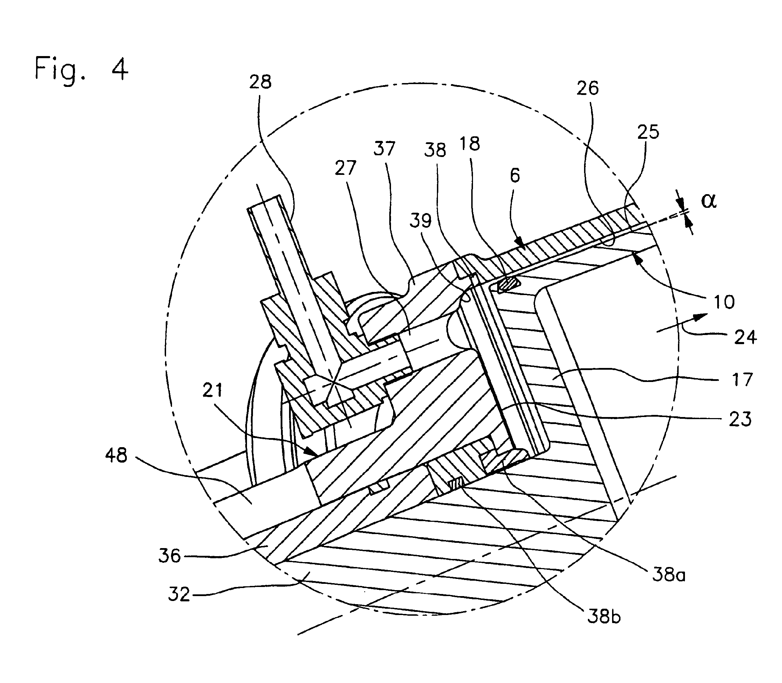

Das Küken 10 verjüngt sich in der Hubverlagerungsrichtung auf die Förder-Grundstellung zu, also in Richtung eines Pfeils 24 in den Fig. 2 und 4, konisch. Aufgrund dieser konischen Verjüngung beträgt ein Winkel α (vgl.
Fig. 4) einer Mantelwand 25 des Kükens 10 bzw. einer Innenwand 26 des Kükengehäuses 6 zur Längsachse 73°. Auch ein anderer kleiner Konuswinkel im Bereich zwischen z. B. 1° und 10° ist möglich.

In der in den Fig. 3 und 4 gezeigten Reinigungsstellung des Kükens 10 ist das Küken 10 über die Dichtringe 15, 18 nicht mehr am Gehäuse der Rohrweiche 1 abgedichtet. Durch die Hubverlagerung aus der Förder-Grundstellung in Gegenrichtung des Pfeils 24 kommt der Umfangswandabschnitt 14 vom gehäusefesten Dichtring 15 frei. Aufgrund der konischen Verjüngung des Kükens 10 kommt in der Reinigungsstellung zudem der Dichtring 18 von der Innenwand 26 des Kükengehäuses 6 frei. Damit ist ein Durchgang von Fluid, z. B. von Reinigungsflüssigkeit, zwischen der Mantelwand 25 des Kükens und der Innenwand 26 des Kükengehäuses 6 z. B. von der Zuführleitung 2 hin zum Bodenbereich des Kükengehäuses 6 und weiter durch eine dort einmündende Reinigungsleitung 27 (vgl. Fig. 4) möglich. Letztere weist einen Anschlussstutzen 28 auf, der sich im Bereich der Führungseinheit 21 radial nach außen erstreckt.

Zum Hubverlagern des Kükens 10 zwischen der Förder-Grundstellung und der Reinigungsstellung längs des Pfeils 24, also parallel zu Längs- bzw. Schwenkachse 7, dient ein Hubverlagerungsantrieb 29. Dieser weist einen Hubzylinder 30 auf, der am vom Küken 10 abgewandten freien Ende der Weichenanordnung 5 montiert ist. Der Hubzylinder 30 wirkt über eine Hubstange 31, die den Schwenkantrieb 20 durchtritt, auf einen Verbindungsstummel 32, der einstückig an den Kükenboden 17 angeformt ist. Zwischen einem Hubelement 33 des Hubzylinders 30 und der Hubstange 31 ist eine Kupplung 34 angeordnet, sodass die Hubstange 31 zum Hubelement 33 axial festgelegt, zu diesem aber verdrehbar ist.

Im Bereich des Schwenkantriebs 20 läuft die Hubstange 31 in einer Hohlwelle 35. Die Hohlwelle 35 erweitert sich am Übergang zwischen dem Schwenkantrieb 20 und der Führungseinheit 21 zu einer Schwenk-Betätigungshülse 36. Letztere ist drehfest mit der Hohlwelle 35 verbunden. Die Schwenk-Betätigungshülse 36 steht innerhalb der Führungseinheit 21 mit dem Verbindungsstummel 32 derart drehfest in Betätigungsverbindung, dass eine Verlagerung des Verbindungsstummels 32 zur Schwenk-Betätigungshülse 36 in axialer Richtung möglich ist, eine Drehung der Schwenk-Betätigungshülse 36 jedoch in eine Drehung des Verbindungsstummels 32 übertragen wird. Zur Kraftübertragung dient hierbei eine Passfeder oder eine Vielkeilwelle.

Ein Außengehäuse 37 der Führungseinheit 21 ist gegen das Kükengehäuse 6 über einen im Bodenbereich des Kükengehäuses 6 angeordneten inneren Flach-Dichtring 38 abgedichtet. Der Flach-Dichtring 38 hat einen rechteckigen Querschnitt. Der Flach-Dichtring 38 schließt zum Innenraum des Kükengehäuses 6, also insbesondere zum Rückzugsraum 22, hin bündig mit den benachbarten Innenwänden des Kükengehäuses 6 beziehungsweise des Außengehäuses 37 ab. Alternativ ist möglich, dass der Flach-Dichtring 38 zum Inneren der Gehäuse 6, 37 hin einen leichten Überstand aufweist. Bei beiden Alternativen ergeben sich leicht zu reinigende Übergänge zwischen dem Flach-Dichtring 38 und den Innenwänden der Gehäuse 6, 37. Da das Außengehäuse 37 den Rückzugsraum 22 bodenseitig abschließt, wird das Außengehäuse 37 auch als Deckel bezeichnet. Die Führungseinheit 21 ist zum Wellenstummel 32 hin über eine Abstreifer-Wellendichtung 38a und einen O-Ring 38b abgedichtet.

Die Reinigungsleitung 27 und der Anschlussstutzen 28 stellen einen im Deckel 37 ausgeführten Spülanschluss dar.

In dem Bodenbereich des Kükengehäuses 6 hat der Rückzugsraum 22 einen konkav gewölbten, kantenfreien Übergangsbereich 39 (vgl. Fig. 4) zwischen der Innenwand 26 des Kükengehäuses 6 und dem Gehäuseboden 23.

Zur Erfassung der jeweiligen Stellung des Kükens 10 dient eine Erfassungseinrichtung 40. Letztere ist zwischen dem Hubzylinder 30 und dem Schwenkantrieb 20 angeordnet. Die Erfassungseinrichtung 40 hat zwei erste Positionssensoren 41, 42 zur Erfassung der Förder-Grundstellung oder der Reinigungsstellung des Kükens 10. Die beiden ersten Positionssensoren 41, 42 sind fest zu einer Konsole 43 der Erfassungseinrichtung 40 axial hintereinander angeordnet und als Näherungssensoren ausgebildet. Als Sensor-Gegenstück für die Positionssensoren 41, 42 dient ein Metallbecher bzw. Schaltring 44, der hubfest mit dem Hubelement 33 verbunden ist. In der Förder-Grundstellung nach Fig. 2 ist der Metallbecher 44 benachbart zu einem der beiden ersten Positionssensoren 41, 42, nämlich zum Positionssensor 42, angeordnet. In der Reinigungsstellung nach Fig. 3 ist der Metallbecher 44 benachbart zum anderen der beiden ersten Positionssensoren 41, 42, nämlich zum Positionssensor 41, angeordnet. Eine Rotationssymmetrieachse des Metallbechers 44 fällt mit der Längsachse 7 zusammen.

Zur Erfassung der ersten oder der zweiten Förderstellung des Kükens 10 dienen zwei zweite Positionssensoren 45, 46 der Erfassungseinrichtung 40. Die beiden zweiten Positionssensoren 45, 46 sind gehäusefest an der Konsole 43 der Erfassungseinrichtung montiert. Die beiden zweiten Positionssensoren 45, 46 sind einander gegenüberliegend gehäusefest axial auf gleicher Höhe relativ zur Längsachse 7 der Hubstange 31 und der Hohlwelle 35 angeordnet. Mit den beiden zweiten Positionssensoren 45, 46 wirkt zur Erfassung der Förderstellung des Kükens 10 eine Sensorfahne 47 zusammen. Letztere ist drehfest an der Hohlwelle 35 montiert, verändert ihre Axialposition bei einer Hubbetätigung der Hubstange 31 also nicht. In der in Fig. 2 dargestellten ersten Förderstellung ist die Sensorfahne 47 dem in Fig. 2 oben dargestellten zweiten Positionssensor 45 benachbart.

Die Rohrweiche 1 wird folgendermaßen betrieben: Im Förderbetrieb kann mit Hilfe der Rohrweiche 1 gewählt werden, ob Fördergut von der Zuführleitung 2 in die erste Abführleitung 3 oder in die zweite Abführleitung 4 gefördert werden soll. Je nach Wahl wird dann das Küken 10 mit Hilfe des Schwenkantriebes 20 in die erste oder in die zweite Förderstellung umgestellt. Zu dieser Umstellung wirkt der Schwenkantrieb 20 auf die Hohlwelle 35, sodass diese um 180° um die Längsachse 7 verdreht wird. Diese Verdrehung wird von der Hohlwelle 35 auf die Schwenk-Betätigungshülse 36 und von dort über den Verbindungsstummel 32 auf das Küken 10 übertragen. Je nach gewählter Förderstellung ist die Sensorfahne 47 dem zweiten Positionssensor 45 oder dem anderen zweiten Positionssensor 46 benachbart. Damit kann über die Erfassungseinrichtung die jeweilige Förderstellung des Kükens 10 erfasst und überwacht werden.

Zur Reinigung der Rohrweiche 1, insbesondere der Weichenanordnung 5 von dieser, wird das Küken 10 durch den Hubverlagerungsantrieb 29 in die Reinigungsstellung zurückgezogen. Hierzu wird das Hubelement 33 des Hubzylinders 30 eingezogen. Diese Hubverlagerung wird über die Hubstange 31 auf den Verbindungsstummel 32 des Kükens 10 übertragen. Je nach erreichter Hubstellung und unabhängig von der jeweiligen Schwenkstellung des Kükens 10 ist der Metallbecher 44 der Erfassungseinrichtung 40 dem ersten Positionssensor 41 oder dem anderen ersten Positionssensor 42 benachbart, sodass mittels der Erfassungseinrichtung 40 eine Erfassung und Überwachung möglich ist, ob das Küken 10 in der Reinigungsstellung oder in der Förder-Grundstellung vorliegt. Bei der Hubverlagerung der Hubstange 31 bleibt die Hohlwelle 35 axial in Position, sodass unabhängig von der Hubstellung zu jedem Zeitpunkt eine Schwenkstellungserfassung des Kükens 10 über die Sensorfahne 47 und die zweiten Positionssensoren 45, 46 möglich bleibt.

In der Reinigungsstellung des Kükens 10 kann Reinigungsflüssigkeit z. B. durch die Zuführleitung 2 zugeführt werden, die dann zwischen der Mantelwand 25 und der Innenwand 26 durch den Bodenbereich des Kükengehäuses 6 hin zur Reinigungsleitung 27 fließen und durch diese und den Anschlussstutzen 28 abgeführt werden kann. Auch ein umgekehrter Fluss von Reinigungsflüssigkeit vom Anschlussstutzen 28 her ist möglich und sogar bevorzugt. Da in der Reinigungsstellung die Dichtringe 15 und 18 unwirksam sind, ist der Fluss der Reinigungsflüssigkeit durch diese Dichtungen nicht beeinträchtigt. In der Förder-Grundstellung ist hingegen über die Dichtringe 15 und 18 eine sichere Abdichtung des Kükens 10 hin zum Kükengehäuse 6 gegeben. Aufgrund des kantenfreien Übergangsbereichs 39 im Bodenbereich des Kükengehäuses 6 ist dort eine einfache Reinigung der Weichenanordnung 5 möglich, insbesondere eine gute Abreinigung bei automatischer Spülung. Insgesamt kann die Weichenanordnung 5 gut gereinigt werden, weshalb sie sich insbesondere für Lebensmittelanwendungen eignet.

Über nicht im Einzelnen dargestellte Signalverbindungen stehen die Antriebe 20, 29 sowie die Positionssensoren 41, 42, 45, 46 mit einer zentralen Steuereinrichtung eines Fördersystems, zu dem die Rohrweiche 1 gehört, in Signalverbindung.

Das Außengehäuse 37 der Führungseinheit 21 stellt gleichzeitig einen Gehäusewandabschnitt des Rohrweichengehäuses dar, welcher den Verbindungsstummel 32 umgibt. In diesem Gehäusewandabschnitt sind einander gegenüberliegend zwei Langlöcher 48 ausgeführt. Diese münden aus dem Rohrweichengehäuse auf Höhe des Wellenstummels 32 aus und zwar axial vom Küken 10 her gesehen hinter der aus der Abstreifer-Wellendichtung 38a und dem O-Ring 38b gebildeten Wellendichtung, die den Verbindungsstummel 32 zum Rohrweichengehäuse hin abdichtet. Bei einem Ausfall dieser Wellendichtung gelangt Fördergut oder Reinigungsflüssigkeit hinter die Wellendichtung und tritt aus den Langlöchern 48 aus der Rohrweiche 1 aus. Dieses austretende Medium dient daher als Anzeige, inwieweit noch eine ausreichende Funktion der Wellendichtung gegeben ist.

Bei der Rohrweiche des beschriebenen Ausführungsbeispiels ist der Hubantrieb des Kükens von der Drehbewegung des Kükens abgekoppelt. Hierzu dient insbesondere die Kupplung 34. Bei einem nicht dargestellten Ausführungsbeispiel ist es auch möglich, dass der Hubzylinder 30 die Drehung der Hubstange 31 mitmacht. In diesem Fall kann auf die Entkopplung des Hubantriebes von der Drehbewegung und insbesondere auf die Kupplung 34 verzichtet werden.

Bei einer nicht dargestellten Ausführungsform entfällt der Dichtring 15, wobei das Küken ausschließlich einseitig auf Seiten des Kükenantriebs 20, 29 gelagert ist. Im Bereich des Umfangswandabschnitts 14 ist das Küken 10 derart passgenau relativ zur dieser im Bereich des Umfangswandabschnitts 14 umgebenden gehäusefesten Umfangsnut gefertigt, dass das Küken 10 in der Förder-Grundstellung nur sehr geringes Spiel zu dieser gehäusefesten Umfangsnut aufweist, dort aber nicht gelagert ist.

Die Rohrweiche 1 besteht in der dargestellten Ausführungsform aus metallischen Grundkomponenten. Bei einer nicht dargestellten Ausführungsform kann das Küken 10 zumindest abschnittsweise aus Kunststoff gefertigt sein. In diesem Fall können separate Dichtelemente, welche das Küken zum Kükengehäuse hin abdichten, entfallen, da über eine Anlage des Kükens am Kükengehäuse eine ausreichende Dichtigkeit erreicht wird. Insbesondere können bei einer solchen Ausführungsform mit einem Kunststoff-Küken die Dichtungen 15 und 18 entfallen.

## Patentansprüche

1. Rohrweiche (1)
- mit einer Zuführleitung (2),
- mit einer ersten Abführleitung (3),
- mit mindestens einer zweiten Abführleitung (4),
- mit einer Weichenanordnung (5), in die die Zuführleitung (2), die erste Abführleitung (3) und die zweite Abführleitung (4) einmünden, umfassend:
-- ein Kükengehäuse (6),
-- ein Küken (10), welches in dem Kükengehäuse (6) um eine Schwenkachse (7), die mit der Längsachse des Kükens (10) zusammenfällt, schwenkbar ist zwischen
-- einer ersten Förderstellung, in der ein erster Förderdurchgang zwischen der Zuführleitung (2) und der ersten Abführleitung (3) unter Verschluss eines zweiten Förderdurchgangs zwischen der Zuführleitung (2) und der zweiten Abführleitung (4) freigegeben ist, und
-- einer zweiten Förderstellung, in der der zweite Förderdurchgang zwischen der Zuführleitung (2) und der zweiten Abführleitung (4) unter Verschluss des ersten Förderdurchgangs zwischen der Zuführleitung (2) und der ersten Abführleitung (3) freigegeben ist,
**dadurch gekennzeichnet, dass** das Kükengehäuse (6) derart größer als das Küken (10) ist, dass Letzteres im Kükengehäuse (6) hubverlagerbar ist zwischen
- einer Förder-Grundstellung, in der das Küken (10) zwischen der ersten und der zweiten Förderstellung verschwenkbar ist,
- einer Reinigungsstellung, in der das Küken (10) zum Kükengehäuse (6) derart beabstandet ist, dass Dichtelemente (15, 18), die das Küken (10) in der Förder-Grundstellung gegen das Kükengehäuse (6) abdichten, unwirksam sind.

2. Rohrweiche nach Anspruch 1, **dadurch gekennzeichnet, dass** das Küken (10) sich in Richtung auf die Förder-Grundstellung zu konisch verjüngt.

3. Rohrweiche nach Anspruch 1 oder 2, **gekennzeichnet durch** einen Kükenantrieb (20, 29)
- mit einem Schwenkantrieb (20) zum Verschwenken des Kükens (10) zwischen den Förderstellungen und
- mit einem Hubverlagerungsantrieb (29) zum Hubverlagern des Kükens (10) zwischen der Förder-Grundstellung und der Reinigungsstellung, wobei die Hubverlagerungsrichtung (24) insbesondere parallel ist zur Schwenkachse (7).

4. Rohrweiche nach einem der Ansprüche 1 bis 3, **gekennzeichnet durch** eine Erfassungseinrichtung (40) für die Kükenstellungen
- mit mindestens einem ersten Positionssensor (41, 42) zur Erfassung der Förder-Grundstellung oder der Reinigungsstellung,
- mit mindestens einem zweiten Positionssensor (45, 46) zur Erfassung der ersten oder der zweiten Förderstellung.

5. Rohrweiche nach Anspruch 4, **dadurch gekennzeichnet, dass** der mindestens eine zweite Positionssensor (45, 46) zwei miteinander zusammenwirkende Sensorkomponenten umfasst, wobei mindestens eine erste Sensorkomponente (45, 46) gehäusefest und eine zweite Sensorkomponente (47) drehfest zum Küken (10) und hinsichtlich der Hubverlagerung gehäusefest angeordnet ist.

6. Rohrweiche nach Anspruch 5 unter Rückbeziehung auf Anspruch 3,
**dadurch gekennzeichnet, dass** der Kükenantrieb (20, 29) umfasst:
- eine Schwenk-Hohlwelle (35) zum Verschwenken des Kükens (10), an der der Schwenkantrieb (20) angreift, und
- eine in der Schwenk-Hohlwelle (35) laufende Hubstange (31) zur Hubverlagerung des Kükens (10), an der der Hubverlagerungsantrieb (29) angreift,
- wobei die zweite Sensorkomponente (47) des zweiten Positionssensors (45, 46) an der Schwenk-Hohlwelle (35) festgelegt ist.

7. Rohrweiche nach einem der Ansprüche 1 bis 6, **dadurch gekennzeichnet, dass** ein Rückzugsraum (22) des Kükengehäuses (6), abgewandt vom Einmündungsbereich der Leitungen (2 bis 4), einen konkav gewölbten, kantenfreien Übergangsbereich (39) zwischen einer Innenwand (26) des Kükengehäuses (6) und einer Bodenwand (23) aufweist.

8. Rohrweiche nach einem der Ansprüche 1 bis 7, **gekennzeichnet durch** einen das Kükengehäuse (6), insbesondere im Bereich des Rückzugsraums (22), einmündenden Spülanschluss (27, 28) für Spülfluid.

9. Rohrweiche nach Anspruch 8, **dadurch gekennzeichnet, dass** der Spülanschluss (27, 28) in einem Deckel (37) des Kükengehäuses (6) ausgeführt ist.

10. Rohrweiche nach einem der Ansprüche 1 bis 9, **dadurch gekennzeichnet, dass** das Küken ausschließlich an einem Ende des Kükens gelagert ist.

11. Rohrweiche nach einem der Ansprüche 1 bis 10 unter Rückbeziehung auf Anspruch 3, **dadurch gekennzeichnet, dass** in einem eine Antriebswelle (32) umgebenden Gehäuseabschnitt (37) der Weichenanordnung (5) mindestens eine insbesondere als Langloch (48) ausgebildete Gehäuseöffnung vorgesehen ist, die aus dem Gehäuse (37) hinter einer die Antriebswelle (32) gegen das Gehäuse (37) abdichtenden Wellendichtung (38a, 38b) ausmündet.

12. Rohrweiche nach einem der Ansprüche 1 bis 11, **dadurch gekennzeichnet, dass** das Küken zumindest abschnittsweise aus Kunststoff besteht.

## Claims

1. Diverter valve (1) comprising
- a feed line (2);
- a first outlet line (3);
- at least one second outlet line (4);
- a valve arrangement (5) in which the feed line (2), the first outlet line (3) and the second outlet line (4) open into, comprising:
-- a stopcock housing (6);
-- a stopcock (10) which is pivotable in the stopcock housing (6) about a pivot axis (7) that coincides with the longitudinal axis of the stopcock (10) between
-- a first transport position in which a first transport passage between the feed line (2) and the first outlet line (3) is open while a second transport passage between the feed line (2) and the second outlet line (4) is closed, and
-- a second transport position in which the second transport passage between the feed line (2) and the second outlet line (4) is open while the first transport passage between the feed line (2) and the first outlet line (3) is closed,
**characterised in that** the stopcock housing (6) is larger than the stopcock (10) to such an extent that the latter is axially displaceable in the stopcock housing (6) between
- a normal transport position in which the stopcock (10) is pivotable between the first and the second transport position,
- a cleaning position in which the stopcock (10) is spaced from the stopcock housing (6) such that sealing elements (15, 18) for sealing the stopcock (10) to the stopcock housing (6) when in the normal transport position are ineffective.

2. Diverter valve according to claim 1, **characterised in that** the stopcock (10) tapers conically in a direction towards the normal transport position.

3. Diverter valve according to claim 1 or 2, **characterised by** a stopcock drive (20, 29) comprising
- a pivot drive (20) for pivoting the stopcock (10) between the transport positions and
- an axial-displacement drive (29) for axially displacing the stopcock (10) between the normal transport position and the cleaning position, wherein the axial displacement device (24) is in particular parallel to the pivot axis (7).

4. Diverter valve according to one of claims 1 to 3, **characterised by** a detection device (40) for the stopcock positions comprising
- at least one first position sensor (41, 42) for detecting the normal transport position or the cleaning position;
- at least one second position sensor (45, 46) for detecting the first or the second transport position.

5. Diverter valve according to claim 4, **characterised in that** the at least one second position sensor (45, 46) comprises two cooperating sensor components, wherein at least one first sensor component (45, 46) is stationary with respect to the housing and a second sensor component (47) is co-rotational with respect to the stopcock (10) and stationary with respect to the housing as far as axial displacement is concerned.

6. Diverter valve according to claim 5 with respect to claim 3, **characterised in that** the stopcock drive (20, 29) comprises:
- a hollow pivot shaft (35) for pivoting the stopcock (10), the pivot drive (20) engaging with the hollow pivot shaft (35), and
- an axial-displacement rod (31) running in the hollow pivot shaft (35) for axially displacing the stopcock (10), the axial-displacement drive (29) engaging with the axial-displacement rod (31),
- wherein the second sensor component (47) of the second position sensor (45, 46) is fastened to the hollow pivot shaft (35).

7. Diverter valve according to one of claims 1 to 6, **characterised in that** a retraction chamber (22) of the stopcock housing (6), the retraction chamber (22) facing away from the opening area of the lines (2 to 4), has a concave, edge-free transition area (39) between an inner wall (26) of the stopcock housing (6) and a bottom wall (23).

8. Diverter valve according to one of claims 1 to 7, **characterised by** a flushing connection (27, 28) for a flushing liquid, the flushing connection (27, 28) opening into the stopcock housing (6) in particular near the retraction chamber (22).

9. Diverter valve according to claim 8, **characterised in that** the flushing connection (27, 28) is provided in a lid (37) of the stopcock housing (6).

10. Diverter valve according to one of claims 1 to 9, **characterised in that** the stopcock is only supported on one end of the stopcock.

11. Diverter valve according to one of claims 1 to 10 with respect to claim 3, **characterised in that** in a housing portion (37) of the valve arrangement (5), the housing portion (37) surrounding a drive shaft (32), at least one housing opening is provided which is in particular designed as a longitudinal hole (48) that leads out of the housing (37) behind a shaft seal (38a, 38b) which seals the drive shaft (32) against the housing (37).

12. Diverter valve according to one of claims 1 to 11, **characterised in that** at least part of the stopcock is composed of a plastic material.

## Revendications

1. Couche anti-abrasive pour un outil de mise en forme constitué d'un matériau comprenant au moins une partie en matériau métallique et une partie en matériau non métallique,
a) la partie en matériau métallique contenant les métaux aluminium, chrome, titane et yttrium avec
- un pourcentage de chrome (22) allant de 1 à 60 %, de préférence de 1 à 40 %,
- un pourcentage de titane (23) allant de 1 à 29 %, de préférence de 2 à 25 %, et
- un pourcentage d'yttrium non volatil (24) allant jusqu'à 5 %, de préférence allant de 0,5 à 4 %, par rapport à chaque fois au pourcentage total d'atomes métalliques dans le matériau,
b) la partie en matériau non métallique contenant les éléments chimiques d'azote et d'oxygène, en particulier sous la forme d'un oxynitrure, avec
- un pourcentage d'oxygène (25) allant de 1 à 10 %, de préférence de 1 à 8 % par rapport au pourcentage total d'atomes non métalliques dans le matériau,
c) le matériau étant présent sous la forme d'un dépôt de couches multiples composé de plusieurs couches individuelles, et
d) les couches individuelles du dépôt de couches multiples présentant au moins en partie différentes compositions de matériau, le pourcentage d'aluminium (21) et le pourcentage d'yttrium (24) restant constants.

2. Couche anti-abrasive selon la revendication 1, **caractérisée en ce que** le pourcentage de matériau métallique contient un pourcentage d'aluminium (21) allant de 40 à 85 %, de préférence allant de 50 à 80 %, par rapport au pourcentage d'atomes métalliques dans le matériau.

3. Couche anti-abrasive selon la revendication 1 ou 2, **caractérisée en ce que** les couches individuelles ont une épaisseur individuelle comprise entre 3 et 50 nm, de préférence comprise entre 3 et 20 nm.

4. Couche anti-abrasive selon la revendication 1, **caractérisée en ce que** la composition du matériau des couches individuelles se répète périodiquement.

5. Couche anti-abrasive selon l'une quelconque des revendications précédentes **caractérisée par** une épaisseur totale allant d'environ de 0,5 à 12 µm.

6. Couche anti-abrasive selon la revendication 1, **caractérisée en ce que** des pourcentages variables de titane (23) et de chrome (22) sont prévus dans les couches individuelles.

7. Couche anti-abrasive selon la revendication 6, **caractérisée en ce que** le pourcentage de chrome (22) varie de 6 à 21 % et le pourcentage de titane (23) de 10 à 25 % entre les couches individuelles dans la partie en matériau métallique.

8. Couche anti-abrasive selon la revendication 1, **caractérisée en ce que** le pourcentage d'oxygène (25) varie d'une couche individuelle à une autre couche individuelle dans la partie en matériau non métallique.

9. Couche anti-abrasive selon la revendication 4, **caractérisée en ce que** la composition du matériau dans les couches individuelles se répète avec un intervalle périodique de deux couches individuelles.
